# EUROPEAN PATENT SPECIFICATION

(11) **EP 3 412 071 B1**
(45) Date of publication and mention of the grant of the patent: **29.01.2020**
(21) Application number: 17747876.5
(22) Date of filing: 02.02.2017
(51) Int. Cl.: H04W 48/20, H04W 36/24

(54) **CELL SELECTION AND CELL RESELECTION IN A WIRELESS COMMUNICATION NETWORK**
ZELLENAUSWAHL UND ZELLENNEUAUSWAHL IN EINEM DRAHTLOSKOMMUNIKATIONSNETZWERK
SÉLECTION ET RESÉLECTION DE CELLULES DANS UN RÉSEAU DE COMMUNICATION SANS FIL

(30) Priority: 04.02.2016 US 201662290998 P
(43) Date of publication of application: 12.12.2018
(73) Proprietor: Telefonaktiebolaget LM Ericsson (PUBL), 164 83 Stockholm (SE)
(72) Inventor: SUNDBERG, Mårten, SE-120 53 Årsta (SE); LIBERG, Olof, SE-118 50 Stockholm (SE); KAZMI, Muhammad, SE-174 64 Sundbyberg (SE); ERIKSSON LÖWENMARK, Stefan, SE-179 98 Färentuna (SE)
(74) Representative: Ericsson
(86) International application number: PCT/SE2017/050090
(87) International publication number: WO 2017/135878

(56) References cited:
- EP-A1- 1 954 077
- EP-A1- 2 557 842
- WO-A1-2011/034960
- WO-A1-2013/024109
- WO-A1-2014/016280
- WO-A1-2014/070100
- WO-A1-2016/024894
- WO-A1-2016/141955
- GB-A- 2 506 888
- JP-A- 2014 220 816
- US-A1- 2010 279 693
- US-A1- 2012 214 501
- US-A1- 2015 289 173

## Description

### TECHNICAL FIELD

Embodiments herein relate to methods and arrangements for supporting cell selection and cell reselection for a device operative in a wireless communication network, e.g. telecommunication network, such as a GSM network.

### BACKGROUND

Communication devices such as wireless communication devices, that simply may be named wireless devices, may also be known as e.g. User Equipments (UEs), mobile terminals, wireless terminals and/or Mobile Stations (MS). A wireless device is enabled to communicate wirelessly in a wireless communication network that typically is a cellular communications network, which may also be referred to as a wireless communication system, or radio communication system, sometimes also referred to as a cellular radio system, cellular network or cellular communication system. A wireless communication network may sometimes simply be referred to as a network and abbreviated NW. The communication may be performed e.g. between two wireless devices, between a wireless device and a regular telephone and/or between a wireless device and a server via a Radio Access Network (RAN) and possibly one or more Core Networks (CN), comprised within the wireless communication network. The wireless device may further be referred to as a mobile telephone, cellular telephone, laptop, Personal Digital Assistant (PDA), tablet computer, just to mention some further examples. Wireless devices may be so called Machine to Machine (M2M) devices or Machine Type of Communication (MTC) devices, i.e. a device that is not necessarily associated with a conventional user, such as a human, directly using the device.

The wireless device may be, for example, portable, pocket-storable, hand-held, computer-comprised, or vehicle-mounted mobile device, enabled to communicate voice and/or data, via the RAN, with another entity, such as another wireless device or a server.

The cellular communication network covers a geographical area which is divided into cell areas, wherein each cell area is served by at least one base station, or Base Station (BS), e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is typically identified by one or more cell identities. The base station at a base station site provides radio coverage for one or more cells. A cell is thus associated with a geographical area where radio coverage for that cell is provided by the base station at the base station site. Cells may overlap so that several cells cover the same geographical area. By the base station providing or serving a cell is meant that the base station provides radio coverage such that one or more wireless devices located in the geographical area where the radio coverage is provided may be served by the base station in said cell. When a wireless device is said to be served in or by a cell this implies that the wireless device is served by the base station providing radio coverage for the cell. One base station may serve one or several cells. Further, each base station may support one or several communication technologies. The base stations communicate over the air interface operating on radio frequencies with the wireless device within range of the base stations.

In some RANs, several base stations may be connected, e.g. by landlines or microwave, to a radio network controller, e.g. a Radio Network Controller (RNC) in Universal Mobile Telecommunication System (UMTS), and/or to each other. The radio network controller, also sometimes termed a Base Station Controller (BSC) e.g. in GSM, may supervise and coordinate various activities of the plural base stations connected thereto. GSM is an abbreviation for Global System for Mobile Communication (originally: Groupe Special Mobile).

In 3rd Generation Partnership Project (3GPP) Long Term Evolution (LTE), base stations, which may be referred to as eNodeBs or eNBs, may be directly connected to other base stations and may be directly connected to one or more core networks.

UMTS is a third generation mobile communication system, which may be referred to as 3rd generation or 3G, and which evolved from the GSM, and provides improved mobile communication services based on Wideband Code Division Multiple Access (WCDMA) access technology. UMTS Terrestrial Radio Access Network (UTRAN) is essentially a radio access network using wideband code division multiple access for wireless devices.

General Packet Radio Service (GPRS) is a packet oriented mobile data service on the 2G cellular communication system's global system for mobile communications (GSM).

Enhanced Data rates for GSM Evolution (EDGE) also known as Enhanced GPRS (EGPRS), or IMT Single Carrier (IMT-SC), or Enhanced Data rates for Global Evolution is a digital mobile phone technology that allows improved data transmission rates as a backward-compatible extension of GSM.

High Speed Packet Access (HSPA) is an amalgamation of two mobile telephony protocols, High Speed Downlink Packet Access (HSDPA) and High Speed Uplink Packet Access (HSUPA), defined by 3GPP, that extends and improves the performance of existing 3rd generation mobile telecommunication networks utilizing the WCDMA. Such networks may be named WCDMA/HSPA.

The 3GPP has undertaken to evolve further the UTRAN and GSM based radio access network technologies, for example into evolved UTRAN (E-UTRAN) used in LTE.

The expression downlink, which may be abbreviated DL, is used for the transmission path from the base station to the wireless device. The expression uplink, which may be abbreviated UL, is used for the transmission path in the opposite direction i.e. from the wireless device to the base station.

In cellular technologies an important aspect is to have wireless devices in a wireless communication network connected to a suitable cell. In case the cell is not suitable the wireless device would cause higher interference levels than otherwise necessary, and the network could experience severe problems, such as near-far complications. It is hence important for the wireless device to select a suitable cell for mobility.

The selection can be done by the wireless device when first entering the network, for example at power ON, or after connecting to a suitable cell, for example if the wireless device is mobile the suitable cell would change over time. These two procedures are referred to as cell selection and cell reselection respectively. The cell selection and cell reselection are performed by the wireless device autonomously based on pre-defined rules, one or more pre-defined parameters and one or more network configured parameters, e.g. signal hysteresis, time hysteresis etc. Cell reselection can be performed both in idle mode or when the device is connected to the network also known as connected mode or active mode. The cell selection and reselection procedures are more generally part of wireless device mobility procedures.

The cell selection and cell reselection are typically based on one or more signal measurement related estimates, such as:
- Total received signal level estimate, that may correspond toa Received Signal strength INdicator (RSSI).
- Wanted signal level estimate.
- Quality based estimate, e.g. quality in terms of equalizer statistics of some sort.
- Carrier to Interference ratio (C/I), Signal to Noise Ratio (SNR) or Signal to Interference+Noise Ratio (SINR) estimate.

One, several, or all of the above estimates can be combined by the wireless device to make a cell (re)selection decision.

The evaluation in case of cell reselection is typically done by the wireless device for its serving cell and for a set of neighboring cells, i.e. cells that are potential target cells for cell reselection. There is also typically a set of criteria or conditions to be fulfilled to trigger measurements for cell reselection, as well as to actually perform the cell reselection, i.e.change of serving cell. Typically the wireless device measures one or more neighbor cells if the serving cell signal measurement value falls below a certain threshold. The wireless device typically also reselects a neighbor cell provided the signal measurement value of the strongest neighbor cell is above a certain threshold and/or the signal measurement value of the strongest neighbor cell is larger than the signal measurement value of the serving cell by a certain margin.

As realized, cell selection and cell reselection are important features in wireless communication networks and improvements are desirable that enable (re)selection of more suitable cells than conventionally would be the case.

US 2012/214501 A1 discloses a method in a UE for handling cell selection. The UE receives from a radio network node a measurement information message which indicates at least two frequencies associated with a respective cell in a respective radio access technology. The UE performs measurements on the frequencies to obtain a respective measurement value for each one of them, and receives a selection indicator message comprising a respective priority for each one of the frequencies. The UE successively evaluates the frequencies in descending priority order. When entering idle mode, the UE selects cell based on the evaluation.

### SUMMARY

An object is to provide one or more improvements regarding cell selections and/or reselection in a wireless communication network, e.g. a wireless communication network based on and/or supporting GSM.

The invention is defined by the appended independent claims. Preferred embodiments are set forth in the dependent claims and in the following description and drawings.

Thanks to embodiments herein the device has information at hand that enables improved cell reselection and/or cell selection compared to a conventional approach. Embodiments herein offers a flexible way that takes into account resources that the device would be assigned if it would select a particular target cell. Thereby it can be avoided problems, as mentioned above, that are associated with always applying e.g. a signal strength based approach or a signal quality based approach.

A further advantage with embodiments herein is support of an enhanced cell selection and reselection procedure that with increased accuracy may direct the device to camp on a more suitable cell than else would be the case.

Embodiments herein also enable the device to use the most, or at least more, suitable one or more measurement metrics based on conditions e.g. interference, cell load etc. This in turn enable improved mobility performance.

### BRIEF DESCRIPTION OF THE DRAWINGS

The various aspects of embodiments disclosed herein, including particular features and advantages thereof, will be readily understood from the following detailed description and the accompanying drawings, in which Figures 1-7 are shown.
Figure 1 is a block diagram schematically depicting an example of a wireless communication network in which embodiments herein may be implemented.
Figure 2 is a combined signaling diagram and flowchart for describing some embodiments herein.
Figure 3 is a flowchart schematically illustrating a first method according to embodiments herein.
Figure 4 is a functional block diagram for illustrating embodiments of a network node according to embodiments herein and how it can be configured to carry out the first method.
Figure 5 is a flowchart schematically illustrating a second method according to embodiments herein.
Figure 6 is a functional block diagram for illustrating embodiments of a device according to embodiments herein and how it can be configured to carry out the second method.
Figures 7a-c are schematic drawings illustrating embodiments relating to computer programs and computer readable media to cause the network node and device to perform the first and second method, respectively.

### DETAILED DESCRIPTION

Throughout the following description, similar reference numerals have been used to denote similar elements, units, modules, circuits, nodes, parts, items or features, when applicable. In the figures, features that appear only in some embodiments may be indicated by dashed lines. Further, in the following, embodiments herein are illustrated by exemplary embodiments. It should be noted that these embodiments are not mutually exclusive. Components from one embodiment may be tacitly assumed to be present in another embodiment and it will be obvious to a person skilled in the art how those components may be used in the other exemplary embodiments.

As a development towards embodiments herein, problems indicated in the Background will first be further elaborated upon.

The more information the device can use to estimate the signal level of serving cell and its neighbors, the more accurate the cell (re)selection procedure(s) may be, and thereby it is enabled a more suitable cell for the device to camp on, i.e. be connected to.

However, there are some important aspects to be considered and that e.g. relates to the metrics mentioned in the Background:
- Signal strength related metrics, such as total received signal level and wanted signal level estimates, typically estimate the output power used by the transmitter and the coupling loss associated with the radio link. These metrics may, for a specific frequency band that is typically in the order of tenths of MHz, be considered independent on the frequency used in the band, the load of the network etc.
- Signal quality, or quality based, metrics, e.g. C/l, SNR and SINR" estimate typically estimate the wanted signal level strength related to the interference on the same and/or neighboring frequencies as well as the thermal noise in the device's receiver chain. These kind of metrics are typically dependent on the interference situation in the network. In this case, a measure on one physical channel can normally not be assumed to be valid in any other channel in the same frequency band.

Hence, signal quality based metrics, that may be referred to as more specific SINR estimate elsewhere in the application, should only be used by the wireless device if the resulting connection with a network node will be on the same physical channel, or another physical channel that experiences the same interference/noise situation, as the one where the measurements are performed, i.e. the measurements related to the metric or metrics in question. Examples of physical channels are broadcast channel, synchronization channel, frequency correction channel etc.

A problem is that it is not known for a device that performs measurements for cell (re)selection for a specific cell, what resources it would in the end be assigned if it would select that cell. Hence the use of a more sophisticated cell search method, e.g. signal quality based, may in the end worsen the cell (re)selection compared to a more rudimentary approach, e.g. signal strength based, such as based on total received signal level. It would hence be an improvement regarding cell selections and/or reselection in a wireless communication network if this problem could be solved or at least reduced.

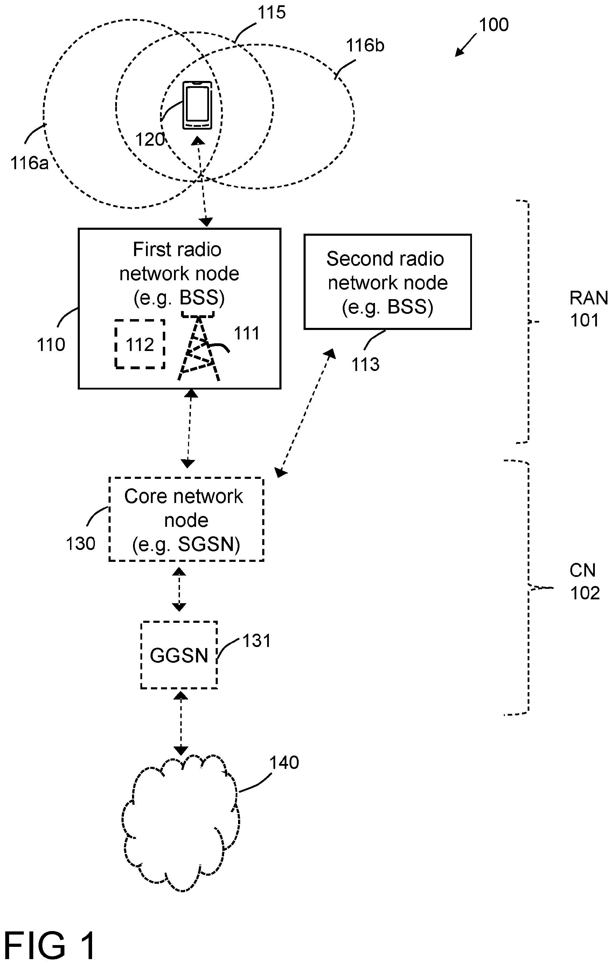

**Figure 1** is a schematic block diagram schematically depicting an example of a **wireless communication network 100** in which embodiments herein may be implemented. The wireless communication network 100 is typically a telecommunication network or system, such as a cellular communication network that may be a GSM network or a wireless communication network that supports GSM. The wireless communication network may comprise a **Radio Access Network (RAN) 101** part and **a Core Network (CN) 102** part.

**A first radio network node 110** is shown comprised in the wireless communication network 100 and in the RAN 101. The radio network node 110 may be a radio network node as illustrated in the figure and may be or be comprised in a Base Station Subsystem (BSS), e.g. such supporting GSM/EDGE, for example when the wireless communication network 100 is a GSM network or a GSM based communication network. The radio network node 110 may be or comprise a base station 111, e.g. a Base Transceiver Station (BTS) of said BSS. The radio network node 110 may further comprise a controlling node 112 of a base station, which may control one or more base stations, and may be a Base Station Controller (BSC) of said BSS. Also **a second radio network node 113** is shown comprised in the wireless communication network 100 and in the RAN 101.

The first radio network node 110, and other network nodes, e.g. the second radio network node 113, may serve and/or control and/or manage one or more devices, typically wireless devices, e.g. MSs, such as **a wireless device 120** shown in the figure, which are supported by and/or operative in the wireless communication network 100. The wireless device 120 may e.g. be of any type discussed herein.

The wireless device 120 may be served in **a cell 115** that may be provided by the radio network node 110. The wireless device 120 may be in range of one or more further **cells 116a-b** that may be potential target cells for cell (re)selection, i.e. selection and/or reselection. The cells 116a-b may be provided by the radio network node 110 or by one or more other radio network nodes of the wireless communication network 100, e.g. the cell 116a may be provided by the first network node 110 and the cell 116b may be provided by the second radio network node 113.

Further, **a core network node 130** may be comprised in the wireless communication network 100 and in the CN 101. The first core network node 130 may be a SGSN if the wireless communication network 100 is a GSM network or a GSM based communication network.

The wireless device 120 may communicate with and/or via the core network node 130 over a radio network node, e.g. the radio network node 110. The CN 102 may provide access for the wireless device to **an external network 140,** e.g. the Internet. The wireless device 120 may thus communicate via the RAN 101 and the CN 102 with the external network 140. When the wireless communication network 100 is a GSM network or a GSM based communication network, the access to the external network is typically via a Gateway GPRS Support Node (GGSN), such as the GGSN 131 illustrated in the figure.

Attention is drawn to that Figure 1 is only schematic and for exemplifying purpose and that not everything shown in the figure may be required for all embodiments herein, as should be evident to the skilled person. Also, a wireless communication network or networks that in reality correspond(s) to the wireless communication network 100 will typically comprise several further network nodes, such as base stations, etc., as realized by the skilled person, but which are not shown herein for the sake of simplifying.

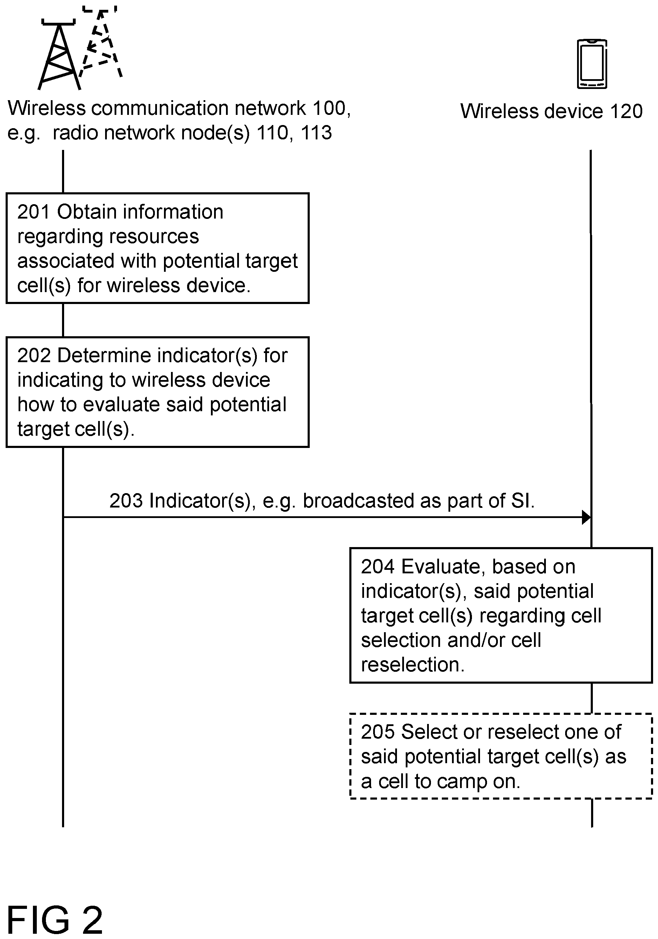

**Figure 2** depicts a combined signalling diagram and flowchart, which will be used to discuss embodiments herein. The methods and actions discussed in the following are for supporting cell selection and/or cell reselection for a device, e.g. the wireless device 120, operative in a the wireless communication network, e.g. the wireless communication network 100. The involved exemplifying nodes, as shown in the figure, are the wireless device 120 and the wireless communication network 100. The wireless device 120 is in the following actions an example of a device. The wireless communication network 100 may in turn be exemplified by one or more network nodes, such as the first radio network node 110 and/or the second radio network node 113. That is, the actions carried out by the wireless communication network 100 in the following may e.g. be performed by a network node that e.g. is a network node currently or last serving the device in a serving cell, e.g. the cell 115, such as the first radio network node 110, and/or be performed by one or more network nodes providing one or more potential target cells for the device, e.g. any one of cells 116a-b, such as the first or second radio network nodes 110, 113..

By a potential target cell is herein meant a cell that may be a target cell when/if a device is subject to cell selection or cell reselection. As should be understood, if the potential target cell becomes actual subject for selection or reselection it becomes an actual target cell. The device may already be associated with a serving cell, e.g. cell 115. After a successful cell selection or reselection the target cell becomes a serving cell that thus may be a new serving cell.

The following actions may be taken in any suitable order and/or be carried out fully or partly overlapping in time when this is possible and suitable.

### Action 201

The wireless communication network 100 obtains information regarding resources associated with a potential target cell, e.g. any one of cells 116a-b, for the wireless device 120. These are resources that would be associated with the wireless device 120 if the wireless device 120 will or would camp on said potential target cell. In other words, the resources are such that will or would be assigned to and/or be used by the wireless device 120 if the wireless device 120 will or would camp on said potential target cell. It may in the following, to facilitate understanding, be assumed that the wireless device 120 is currently camping on the cell 115.

Although mainly a single target cell is discussed here and in the following to facilitate understanding, it should be noted that the present action and other actions involving the target cell may be performed for multiple potential target cells.

The information may e.g. be provided in and be obtained from System Information (SI) of the serving cell, i.e. the cell that the wireless device 120 is currently camping on, e.g. cell 115, and/or SI of the potential target cell, e.g. any one of cells 116a-b. Another option is to obtain the information over a connection established with the serving cell, e.g. cell 115, and e.g. receiving the information by dedicated signaling.

SI is a known concept and used in most wireless communication networks, in particular cellular ones. SI may be described as a set of information, e.g. in the form of a set of messages, for informing about, such as defining, indicating and/or identifying, properties of a specific cell, typically a cell that the SI is associated with. The SI is typically broadcasted in the cell that the SI is associated with. SI may also inform about more general properties of the wireless communication network providing the cell, and/or properties of neighboring cells. The properties may e.g. include which frequencies are used by the cell and by other parts of or the whole wireless communication network.

### Action 202

The wireless communication network 100 determines, based on said obtained information, an indicator for indicating to the wireless device 120 how to evaluate the potential target cell, e.g. any one of cells 116a-b, regarding cell selection and/or cell reselection, i.e. regarding selecting and/or reselecting the potential target cell to become serving cell.

The indicator may be determined by selecting the indicator from a number of predetermined and/or predefined indicators.

The indicator may e.g. indicate what, e.g. one or more measures, metrics, criteria, and/or estimates, to be used for evaluating the potential target cell.

The indicator may e.g. indicate that signal quality is to be used for evaluating the potential target cell and/or that signal strength is to be used for evaluating the potential target cell. Signal quality and signal strength indicate different ways, that may be alternative ways, of how to evaluate the potential target cell. The signal quality may be associated with, e.g. relate to or be, Signal to Interference and Noise Ratio (SINR), Signal to Noise Ratio (SNR) and/or Carrier to Interference ratio(C/I). The signal strength may be associated with, e.g. relate to or be, received signal level, e.g. so called total received signal level, and/or wanted signal power.

The indicator may be of a predetermined and/or predetermined type and/or be a predetermined and/or predetermined parameter, which type and/or parameter become associated with a certain value by the determination, and which value may have a predetermined and/or predefined meaning. The certain value may in the determination be selected from a number of predetermined and/or predefined values, the values having different predetermined and/or predefined meanings. The indicator may be using a predetermined and/or predetermined number of bits, such as 1 bit, i.e. single binary bit, in case the indicator shall indicate one of two possible options.

When the present action is performed for multiple potential target cells, as mentioned above, multiple indicators are determined, typically separately per cell.

In some embodiments, the indicator, e.g. a single binary bit, indicates either an estimate that is based on signal quality or an estimate that is based on wanted signal strength.

In some embodiments, the indicator is determined to indicate that signal quality, e.g. SINR, is to be used for evaluating the potential target cell. This indication may be based on, e.g. result from, a number of channels allocated for broadcast channels in the potential target cell.

In some embodiments, the indicator is determined to indicate that both signal quality, e.g. SINR, and signal strength, e.g. wanted signal strength, is to be used for evaluating the potential target cell. The indicator may further indicate a first procedure for how the signal quality and the signal strength shall be used in combination. For example, the indicator may indicate that signal quality is first to be used for ranking, e.g. prioritizing, when there are multiple potential target cells, e.g. so that a cell with better signal quality is prioritized over one with less good signal quality. In case some potential target cells are sufficiently close to each other, e.g. within a certain range from each other, which range may be based on accuracy associated with the signal quality evaluation, then signal strength may be used to further evaluating these potential target cells and for ranking, e.g. prioritizing, them based on signal strength. For such cells, a cell with higher signal strength is prioritized over a cell will lower signal strength. Information to enable the device to act upon an indicator like this, e.g. information on said range, may be predetermined and/predefined and thus fully or partly known in advance by the wireless device 120 and/or may fully or partly be signaled to the wireless device 120, possibly in association with the indicator, such as sent as part of SI associated with, e.g. broadcasted in, the potential target cell, e.g. any one of cells 116a-b.

In some embodiments, the indicator is further determined based on estimated or expected interference at, e.g. affecting and/or received by, the wireless device 120. The estimated or expected interference at the wireless device 120 should be such that is relevant for mobility purpose, or in other words relevant for cell selection and/or cell reselection. For example, if received interference or expected received interference from one or more cells, e.g. one or more potential target cells and/or serving cell, e.g. the cells 115, 116a-b, is larger than a certain threshold, then the indicator may be determined to indicate that signal quality is to be used for evaluating the potential target cell. Otherwise, such as if the received interference or expected received interference from said one or more cells is not larger than said certain threshold, then the indicator may be determined to indicate that signal strength is to be used for evaluating the potential target cell.

### Action 203

The wireless communication network 100 sends the indicator to the wireless device 120 that receives it.

As should be understood, the indicator is sent by a network node of the wireless communication network 100, e.g. by the first radio network node 110 or the second radio network node 113. The network node sending the indicator may thus be a radio network node providing the potential target cell, e.g. any one of cells 116a-b, and/or providing a serving cell, e.g. the cell 115, of the wireless device 120.

In case of multiple potential target cells and multiple indicators, as mentioned above, each indicator may be sent only in association with, e.g. broadcasted in, the potential target cell that the indictor was determined for, or there may be one or more cells, e.g. a serving cell of the device and/or a potential target cell, that sends, e.g. broadcasts, indicators associated with more than one potential target cell.

The indicator may be broadcasted, e.g. on a broadcast channel and/or in a message for broadcasting information to devices, such as a BroadCast CHannel (BCCH). The broadcast channel may be associated with a specific cell, e.g. the potential target cell, such as any one of cells 116a-b, of the serving cell, e.g. cell 115. The indicator may be broadcasted as part of SI, i.e. be included in SI, associated with a cell.

In some embodiments the indicator is only sent by and/or only valid if sent by the potential target cell, e.g. any one of cells 116a-b, such as part of SI associated with, e.g. broadcasted in the potential target cell. In said case of multiple potential target cells and multiple indicators, the device may thus need to receive indicators, e.g. by receiving SI, from multiple potential target cells.

The wireless device 120 may in the present action also receive one or more further indicators for other potential target cells. For example, if the potential target cell is the cell 116a and the indicator mentioned above is a first indicator that indicates how to evaluate this cell regarding cell selection and/or cell reselection, the wireless device 120 may also receive another, second indicator that indicates how to evaluate the cell 116b regarding cell selection and/or cell reselection. The first and second indicators are typically received from different network nodes, e.g. from the first radio network node 110 and the second radio network node 113, respectively.

Hence, the wireless device 120 may receive one or more indicators that may correspond to the above mentioned multiple indicators and be associated with multiple potential target cells, respectively. The wireless device 120 may also receive other information, such as SI, as described above.

### Action 204

The wireless device 120 evaluates, based on said received one or more indicators, one or more potential target cells, e.g. the cells 116a-b, regarding cell selection and/or cell reselection. The evaluation may further be based on received other information, such as SI, as described above. The wireless device may thus evaluate one or more potential target cells as described above.

In some embodiments the evaluation is further based on predetermined and/or predefined criteria for cell selection and/or cell reselection, e.g. specified in a technical specification, and/or indicated separately to the wireless device 120, e.g. comprised in SI.

In some embodiments, already indicated above, the wireless device 120 evaluates said one or more potential target cells, e.g. cells 116a-b, based on estimated or expected interference. For example, if received interference or expected received interference from one or more cells, e.g. the one or more potential target cells 116a-b, is larger than a certain threshold then the wireless device 120 may use signal quality to evaluate said one or more potential target cells regarding cell selection and/or cell reselection. Otherwise, such as if the received interference or expected received interference from the one or more potential target cells is not larger than said certain threshold, then the wireless device 120 may use signal strength to evaluate said one or more potential target cells regarding cell selection and/or cell reselection.

### Action 205

The wireless device 120 may then select or reselect, based on said evaluation, one of said potential target cells, e.g. the cell 116b. Performing the cell selection or cell reselection as such may be as, or be based on, conventional cell selection or cell reselection.

In some embodiments, whether to use or not to use said first procedure discussed above under Action 202, is signaled, e.g. sent, to the wireless device 120 by the wireless communication network 100 separately from the indicator as such. For example, use of the first procedure may be signaled in SI but separate from the indicator, even if the indicator is comprised in the SI. The first procedure may be signaled in the SI, e.g. by means of an information element that may be optional, that the procedure shall be used only in certain signal quality region(s), e.g. SINR region(s), such as within certain ranges as described above. Such signal quality regions or ranges may be predetermined and/or predefined, e.g. in a technical specification.

In some embodiments, the indicator indicates or identifies an offset to the device, which offset is associated with signal quality and the potential target cell, e.g. any one of cells 116a-b. Alternatively the offset may be determined and/or sent separate from the indicator, e.g. determined by and/or sent to the wireless device 120 by a network node, e.g. as part of SI associated with, e.g. broadcasted in, the potential target cell, e.g. any one of cells 116a-b. When the offset is non-zero this may indicate to the wireless device 120 that resources, that will be assigned to the wireless device 120 if the wireless device 120 will camp on said potential target cell, will be assigned on a different physical channel than a physical channel used for evaluating the potential target cell. The offset may further indicate to the wireless device 120 if an interference level on said different physical channel will be higher or lower than an interference level on the physical channel used for evaluating the potential target cell.

Thanks to embodiments herein, e.g. as described above in connection with Figure 2 and actions thereof, the wireless device 120 has information at hand that enables improved cell reselection and/or cell selection compared to a conventional approach. Embodiments herein offers a flexible way that takes into account resources that a device would be assigned if it would select a particular target cell. Thereby it can be avoided problems, as mentioned above, that are associated with always applying e.g. a signal strength based approach or a signal quality based approach.

A further advantage with embodiments herein is support of an enhanced cell selection and reselection procedure that with increased accuracy may direct a device to camp on a more suitable cell than else would be the case.

Embodiments herein also enable a device to use the most, or at least more, suitable one or more measurement metrics based on conditions e.g. interference, cell load etc. This in turn enable improved mobility performance.

Some further examples and details of embodiments indicated above will now follow.

To facilitate understanding and comparison with the above, the wireless device 120 is in the following used as non-limiting example of a device and the wireless communication network 100 is in the following used as a non-limiting example of a wireless communication network. Network node below may be exemplified in a non-limiting manner by the first or second radio network nodes 110, 113.

In some examples described below the wireless device 120 obtains information about one or more metrics for performing one or more measurements on one or more cells. The skilled person realized that the wireless device 120 may obtain this information by e.g. receiving the indicator as discussed above. The measurement metric may be selected by the wireless device 120 based on pre-defined rules, e.g. standardized principles, and/or based on indication or information received from a network node. The wireless device 120 may further use the results of the measurements for one or more tasks. Examples of tasks are cell selection, cell reselection, reporting results to a network node, for determining location or position of the wireless device 120, storing the results for using them at a future time etc.

According to a solution herein, an indication, that may correspond to the above mentioned indictor, may be provided from a network node, e.g. BSC or BTS, such as the first or second network nodes 110, 113, to a device, e.g. the wireless device 120, regarding which cell (re)selection metric is to be used for a specific cell, i.e. potential target cell, e.g. cell 116b, whose signal is to be measured for mobility purposes, e.g. for cell selection or reselection. The selection of metric by the wireless communication network 100, may be based on the knowledge of what resources will be used by the wireless device 120, if camping on the potential target cell, and being assigned resources thereon. The wireless device 120 may then, based on the received indication, determine the metric for performing measurements the indicated cell, perform the measurements on the indicated cell and may select or reselect the cell based on at least the performed measurement.

For example: In a GSM/GERAN system a specific cell may have two or more different frequency layers, each with its own frequency re-use, load, and spectrum allocation. As described below, a "SINR estimate", or signal quality based evaluation, may mainly be useful if the wireless device 120 would be assigned the frequency layer it is performing the measurements on. For example if the specific cell, e.g. a GSM cell, only consists of a BCCH carrier, the network node may with some confidence assume that the resources that the wireless device 120 uses for measurements as a basis for cell (re)selection will also be used by the network node, if the wireless device 120 in the end would reselect to this cell, and be assigned resources thereon.

In a first example, a choice between a signal quality, e.g. SINR, based estimate and a wanted signal strength estimate is indicated to the wireless device 120 by a network node for all relevant cells, e.g. by the first radio network node 110 for cell 115 and/or cells 116a-b. A signal quality based measurement metric may comprises both signal strength of a signal or a channel and interference of the signal or on the channel e.g. signal strength/interference. Examples of wanted signal strength measurement metrics are path loss, Received (Rx) signal LEVel (RxLev), BCCH carrier RSSI, pilot strength etc. The indication may be implemented or realized by a single code point, i.e. a single binary bit. For example SINR and signal strengths metric may be pre-defined. As an example an indication of 0 and 1 may correspond to selection of SINR and wanted signal strength metrics respectively.

In a second example, an indication, or indicator, of measurement type can be included in the System Information (SI) of the serving cell, e.g. cell 115, of the wireless device 120 and/or to both the serving cell and all neighbor cells of interest. The indication does not necessarily have the same value but could be specific values on a per cell basis.

In a third example, the use of a signal quality, e.g. SINR, based estimate is implicitly indicated by the network node based on number of channels allocated for a broadcast channels e.g. frequency reuse factor of a BCCH carrier. An example is GSM where the SI contains information about the frequency allocation of the serving cell. An example of frequency allocation is BCCH carrier of a GSM cell. In case the frequency allocation contains a single frequency channel serving the BCCH layer, then a SINR based estimate may be chosen, else an wanted signal strength estimate may be chosen. More generally, when the BCCH carrier frequency reuse, e.g. indicated by K, is equal to or below a threshold, K1, e.g. K1=3, in a set of cells then the signal quality metric is used by the wireless device 120 for mobility procedures. But if K is larger than a threshold then the wanted signal strength is used by the wireless device 120 for the mobility procedures. Such rule may be pre-defined and based on such rule the wireless device 120 can make selection of the metric for that cell, use it for measurement and/or cell (re)selection involving that cell. The value of the threshold K1 may be pre-defined or signaled by a network node e.g. via SI.

In a fourth example, an indication, or indicator, of measurement type is only valid for the serving cell, e.g. cell 115, and included in the SI of that cell. This implies that the wireless device 120 may have to acquire the SI for each neighbor cell, e.g. cells 116a-b, of interest to understand which measurement type that should be used for each specific cell.

In a fifth example, a criteria to select between cells candidates for cell (re)selection, for the one or more of the different measurement types is predefined e.g. in specification text, or alternatively indicated to the wireless device 120, for example by the SI. For example, if a certain set of cells, e.g. cell 116a, are evaluated based on one metric, let's assume e.g. SINR, while another set of cells, e.g. cell 116b, are evaluated based on a different metric, let's assume e.g. total signal strength, it, may be pre-defined how to use these two metrics and e.g. rank the full set of cells, e.g. cells 116a-b, from these two metrics, in order to find and be able to select a cell most suitable to camp on.

The indication, or indicator, e.g. indicating measurement type, may be comprised in SI but may also or alternatively be included in e.g. any other broadcasted signal and/or message and/or channel.

In a sixth example, it is considered beneficial to combine the signal quality, e.g. SINR, based and wanted signal strength based estimates. The SINR based estimate may first be used by the wireless device 120 to rank cells for cell selection and reselection. The ranking of the cells may be done in terms of ascending order of their estimated signal qualities. In case two or more cells fall within a certain signal quality, e.g. SINR range, such as 3 dB, then those cells may be further evaluated, and ranked, based on wanted signal strength. The cell, among the ranked cells, with the highest signal strength may be selected by the wireless device 120 for cell selection/reselection. The values of signal quality margin, thresholds etc. may be pre-defined or may be signalled by the network node to the wireless device 120. The SINR range may e.g. correspond to SINR values falling below a lower threshold, or falling above an upper threshold, both marking the start of SINR regions where it is difficult to perform SINR estimation with sufficient accuracy.

In a seventh example a second code point is added to the mentioned SI indication, i.e. indication comprised in SI, to signal the use of the combined method by the network node. The combined method means, as described in the sixth example, use of both signal quality and wanted signal strength for the purpose of wireless device mobility, i.e. cell (re)selection. For example the indication may be sent by the network node indicating to the wireless device 120 whether or not to use the combined method. In another exemplary implementation the network node may indicate whether the wireless device 120 should use combined method or signal quality based method for the purpose of mobility in all or indicated cells e.g. for cell selection and/or reselection, i.e. cell (re)selection. In another example, the network node may indicate whether the wireless device 120 should use any of: the combined method, a signal quality based method and a wanted signal strength based method for the purpose of mobility in all or indicated cells, e.g. for cell selection/reselection. An optional Information Element (IE) may then also be added to the SI to signal the SINR regions where the combined method should be used.

In an eight example the mentioned signal quality, e.g. SINR, regions or its ranges are predefined, e.g. in specification text.

In a ninth example, the combined method is always used, e.g. instead of the SINR based method.

In a tenth example, a cell-specific offset to the signal quality, e.g. SINR, based estimate is indicated to the wireless device 120 by a network node. The offset may be expressed in log scale, e.g. X dB, or in linear scale. If this offset is non-zero. e.g. in log scale, then it indicates that resources would be assigned on a different physical channel. e.g. a different frequency layer, than the channel on which the measurements are made upon, and further that the interference level on the assigned resources will be higher or lower, as indicated by the offset, than the interference level on the measured channel. The network node may determine the offset based on e.g. statistics of interference level differences between channels within the cell. An example of a scenario where this method could be useful is a GSM system in which the BCCH layer, on which neighbour cell measurements are done, typically have a sparser reuse, and thereby lower interference levels, than other frequency layers.

In an eleventh example, one of the signal quality, e.g. SINR, based measurement metric and the wanted signal strength based measurement metric is selected based on estimated or expected interference level at the wireless device 120 for mobility procedures. For example, if the received interference or expected received interference from one or more cells, e.g. including cell 116a, is larger than a certain threshold, then the signal quality based measurement metric is selected for mobility procedure of the wireless device 120 with regard to one or more cells, e.g. cells 115, 116a-b, in the coverage area of the wireless device 120. Otherwise, if the received interference or expected received interference from one or more cells, e.g. cells 116a-b, is not larger than the certain threshold then the wanted signal strength based measurement metric is selected for the mobility procedure of the wireless device 120 with regard to one or more cells, e.g. cells 115, 116a-b, in the coverage area of the wireless device 120. For example, the network node may estimate the interference at the wireless device 120 and determine the metric based on the estimated interference. The network node may estimate the interference at the wireless device 120 based on load in one or more channels in one or more cells, e.g. cells 116a-b. The cell load in turn may be determined based on for example one or more of: estimated transmit power in a cell, number of wireless devices in a cell etc. In this case the network node, after determining the measurement metric, may explicitly signal information or indication about the measurement metric to be used by the wireless device 120 for mobility purposes e.g. cell selection and/or reselection. The network node may regularly monitor the cell load in cells and may change the measurement metric to be used if the cell load increases or decreases substantially. For example, the network node may signal a threshold corresponding to estimated interference level, e.g. Y dBm, at the wireless device 120. In this example the wireless device 120 may estimate the interference level from one or more cells, e.g. cells 116a-b, such as total received power including noise etc, and compare it with the threshold. If the estimated interference is above the threshold then the wireless device 120 may use the signal quality measurement metric for mobility procedures, but otherwise the wireless device 120 may use the wanted signal strength measurement metric for mobility procedures.

As already indicated, advantages with solutions herein include e.g. support of an enhanced cell selection and reselection procedure that with increased accuracy may direct a device to camp on a more suitable cell than else would be the case. Solutions herein enable a device to use the most, or at least more, suitable one or more measurement metrics based on conditions e.g. interference, cell load etc. This in turn enable improved mobility performance.

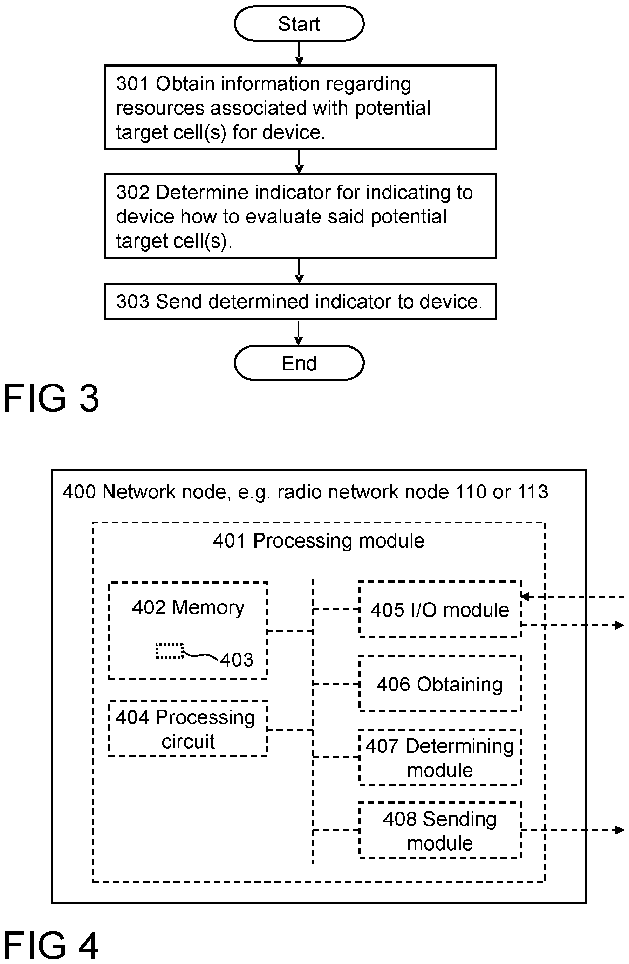

**Figure 3** is a flow chart schematically illustrating embodiments of a first method, performed by a wireless communication network that is exemplified by the wireless communication network 100 in the following. The method is for supporting cell selection and/or cell reselection for a device operative in the wireless communication network 100. The device is exemplified by the wireless device 120 in the following.

In some embodiments, the first method is performed by a network node comprised in the wireless communication network 100, e.g. the first radio network node 110 or the second radio network node 113.

The method comprises the following actions, which actions may be taken in any suitable order and/or be carried out fully or partly overlapping in time when this is possible and suitable.

### Action 301

The wireless communication network 100 obtains information regarding resources associated with one or more potential target cells, respectively, for the wireless device 120, which resources would be associated with the wireless device 120 if the wireless device 120 would camp on said one or more potential target cells. Said one or more potential target cells may be exemplified by cells 116a-b.

This action may fully or partly correspond to action 201 as described above.

### Action 302

The wireless communication network 100 determines, based on said obtained information, an indicator for indicating to the wireless device 120 how to evaluate said one or more potential target cells regarding cell selection and/or cell reselection.

Said indicator may be determined by selecting it from a number of predetermined indicators.

Said determined indicator may indicate that signal quality is to be used for evaluating said one or more potential target cells and/or that signal strength is to be used for evaluating said one or more potential target cells.

In some embodiments, said determined indicator may indicate, based on a number of channels allocated for broadcast channels in a potential target cell, e.g. cell 116a, of said potential target cells, that signal quality is to be used for evaluating that potential target cell.

In some embodiments, said determined indicator indicates that both signal quality and signal strength is to be used for evaluating at least one of said one or more potential target cells. It may be further indicated to the wireless device 120 a procedure for how the signal quality and the signal strength shall be used in combination.

Further, in some embodiments, said indicator is determined based on estimated or expected interference affecting the wireless device 120.

This action may fully or partly correspond to action 202 as described above.

### Action 303

The wireless communication network 100 sends the determined indicator to the wireless device 120.

This action may fully or partly correspond to action 203 as described above.

**Figure 4** is a schematic block diagram for illustrating embodiments of **a network node 400,** that may be the first radio network node 110 or the second radio network node 113 discussed above, and how it may be configured to perform the first method and/or one or more actions described herein relating to the network node 400, e.g. for being performed by, the network node 400. The network node 400 is thus for supporting cell selection and/or cell reselection for a device, e.g. the wireless device 120, operative in a wireless communication network, e.g. the wireless communication network 100. The network node 400 may comprise:
**A processing module 401,** such as a means, one or more hardware modules, including e.g. one or more processors, and/or one or more software modules for performing said method and/or actions.
**A memory 402,** which may comprise, such as contain or store, **a computer program 403.** The computer program 403 comprises 'instructions' or 'code' directly or indirectly executable by the network node 400 so that it performs the said method and/or actions. The memory 402 may comprise one or more memory units and may be further be arranged to store data, such as configurations and/or applications involved in or for performing functions and actions of embodiments herein.
**A processing circuit 404** as an exemplifying hardware module and may comprise or correspond to one or more processors. In some embodiments, the processing module 401 may comprise, e.g. 'is embodied in the form of' or 'realized by' the processing circuit 404. In these embodiments, the memory 402 may comprise the computer program 403 executable by the processing circuit 404, whereby the network node 400 is operative, or configured, to perform said method and/or actions.
**An Input/Output (I/O) module 405,** configured to be involved in, e.g. by performing, any communication to and/or from other units and/or nodes, such as sending and/or receiving information to and/or from other external nodes or devices. The I/O module 405 may be exemplified by an obtaining, e.g. receiving, module and/or a sending module, when applicable.

The network node 400 may also comprise other exemplifying hardware and/or software module(s), which module(s) may be fully or partly implemented by the respective processing circuit. For example, the network node 400 may further comprise **an obtaining module 406** and/or **an determining module 407** and/or **a sending module 408.**

Hence, the network node 400 and/or the processing module 401 and/or the processing circuit 404 and/or the I/O module 405 and/or the obtaining module 406, are operative, or configured, to obtain said information regarding resources associated with said one or more potential target cells, respectively.

Further, the network node 400 and/or the processing module 401 and/or the processing circuit 404 and/or the determining module 407, are operative, or configured, to determine, based on said obtained information, said indicator for indicating to the wireless device 120 how to evaluate said one or more potential target cells regarding said cell selection and/or cell reselection.

Moreover, the network node 400 and/or the processing module 401 and/or the processing circuit 404 and/or the I/O module 405 and/or the sending module 408, are operative, or configured, to send the determined indicator to the wireless device 120.

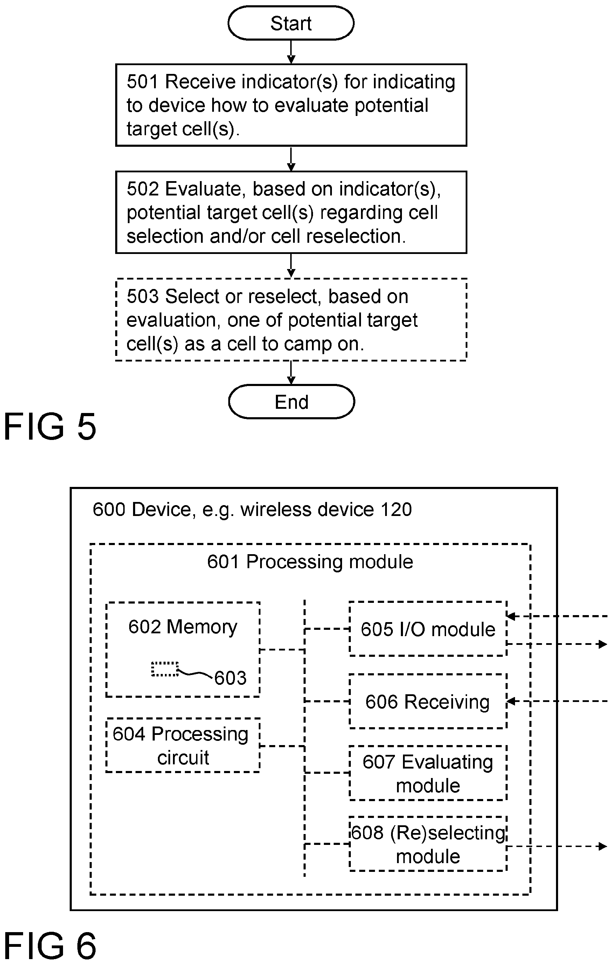

**Figure 5** is a flow chart schematically illustrating embodiments of a second method, performed by a device, for supporting cell selection and/or cell reselection for the device. The device is operative in a wireless communication network that is exemplified by the wireless communication network 100 in the following. The device is exemplified by the wireless device 120 in the following.

The method comprises the following actions, which actions may be taken in any suitable order and/or be carried out fully or partly overlapping in time when this is possible and suitable.

### Action 501

The wireless device 120 receives, from the wireless communication network 100, one or more indicators indicating to the wireless device 120 how to evaluate one or more potential target cells, e.g. cells 116a-b, regarding cell selection and/or cell reselection for the wireless device 120.

Said one or more indicators may be received from a cell that the wireless device 120 is currently camping on, e.g. cell 115, and/or from at least one of said one or more potential target cells, e.g. cells 116a-b.

Said at least one of said one or more indicators may indicate that signal quality and/or signal strength are to be used for evaluating at least one of said one or more potential target cells.

In some embodiments, an indicator of said at least one indicator indicates, based on a number of channels allocated for broadcast channels in a potential target cell, e.g. the cell 116a, of said potential target cells, that signal quality is to be used for evaluating that potential target cell.

In some embodiments, at least one of said one or more indicators indicates that both signal quality and signal strength are to be used for evaluating at least one of said one or more potential target cells. It may be further indicated to the wireless device a procedure for how the signal quality and the signal strength shall be used in combination.

In some embodiments, at least one of said one or more indicators is determined based on estimated or expected interference affecting the wireless device 120.

This action may fully or partly correspond to action 203 as described above.

### Action 502

The wireless device 120 evaluates, based on said received one or more indicators, said one or more potential target cells, e.g. cells 116a-b, regarding cell selection and/or cell reselection

This action may fully or partly correspond to action 204 as described above.

### Action 503

The wireless device 120 may select or reselect, based on said evaluation, one of said one or more potential target cells as a cell to camp on.

This action may fully or partly correspond to action 205 as described above.

**Figure 6** is a schematic block diagram for illustrating embodiments of **a device 600,** that may be the wireless device 120 discussed above, and how it may be configured to perform the second method and/or one or more actions described herein relating to the device 600, e.g. for being performed by, the device 600. The device 600 is thus for supporting cell selection and/or cell reselection for the device 600 in a wireless communication network, e.g. the wireless communication network 100. The device 600 may comprise:
**A processing module 601,** such as a means, one or more hardware modules, including e.g. one or more processors, and/or one or more software modules for performing said method and/or actions.
**A memory 602,** which may comprise, such as contain or store, **a computer program 603.** The computer program 603 comprises 'instructions' or 'code' directly or indirectly executable by the device 600 so that it performs said method and/or actions. The memory 602 may comprise one or more memory units and may be further be arranged to store data, such as configurations and/or applications involved in or for performing functions and actions of embodiments herein.
**A processing circuit 604** as an exemplifying hardware module and may comprise or correspond to one or more processors. In some embodiments, the processing module 01 may comprise, e.g. 'is embodied in the form of' or 'realized by' the processing circuit 604. In these embodiments, the memory 602 may comprise the computer program 603 executable by the processing circuit 604, whereby the device 600 is operative, or configured, to perform said method and/or actions.
**An Input/Output (I/O) module 605,** configured to be involved in, e.g. by performing, any communication to and/or from other units and/or nodes, such as sending and/or receiving information to and/or from other external nodes or devices. The I/O module 605 may be exemplified by an obtaining, e.g. receiving, module and/or a sending module, when applicable.

The device 600 may also comprise other exemplifying hardware and/or software module(s), which module(s) may be fully or partly implemented by the respective processing circuit. For example, the device 600 may further comprise **a receiving module 606** and/or **an evaluating module 607** and/or **a re(selecting) module 608.**

Hence, the device 600 and/or the processing module 601 and/or the processing circuit 604 and/or the I/O module 605 and/or the receiving module 606, are operative, or configured, to receive from the wireless communication network 100, said one or more indicators indicating to the wireless device 120 how to evaluate said one or more potential target cells regarding cell selection and/or cell reselection.

Further, the device 600 and/or the processing module 601 and/or the processing circuit 604 and/or the evaluating module 607, are operative, or configured, to evaluate based on the received one or more indicators, said one or more potential target cells regarding the cell selection and/or cell reselection.

Moreover, in some embodiments, the device 600 and/or the processing module 601 and/or the processing circuit 604 and/or the (re)selecting module 608, are operative, or configured, to select or reselect, based on said evaluation, said one of said one or more potential target cells as the cell to camp on.

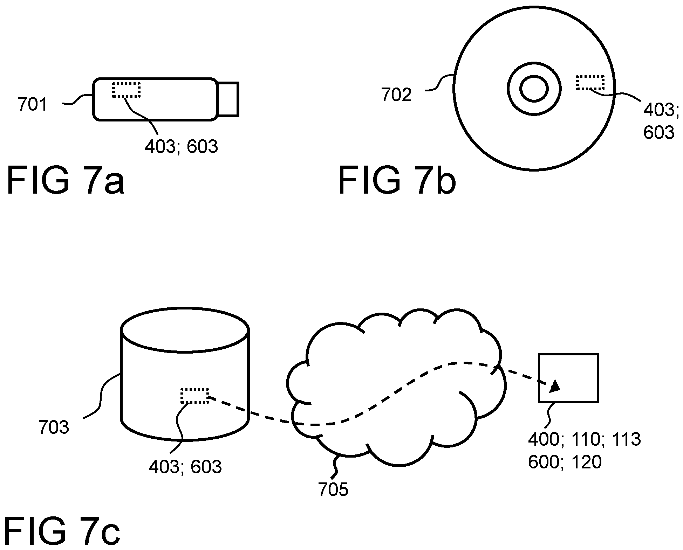

**Figures 7a****-c** are schematic drawings illustrating embodiments relating to a computer program that may be any one of the computer programs 403 and 603, and that comprises instructions that when executed by the respective processing circuit 404, 604 causes the network node 400 or the device 600 to perform the respective method as described above.

In some embodiments there is provided a computer program product, i.e. a data carrier, comprising a computer-readable medium and the computer program stored on the computer-readable medium. By computer readable medium may be excluded a transitory, propagating signal and the computer readable medium may correspondingly be named non-transitory computer readable medium. Non-limiting examples of the computer-readable medium are a memory card or **a memory stick 701** as in Figure 7a, **a disc storage medium 702** such as a CD or DVD as in Figure 7b, **a mass storage device 703** as in Figure 7c. The mass storage device 703 is typically based on hard drive(s) or Solid State Drive(s) (SSD). The mass storage device 703 may be such that is used for storing data accessible over **a computer network 705,** e.g. the Internet or a Local Area Network (LAN).

Each computer program 403, 603, may furthermore be provided as a pure computer program or comprised in a file or files. The file or files may be stored on the computer-readable medium and e.g. available through download e.g. over the computer network 705, such as from the mass storage device 703 via a server. The server may e.g. be a web or File Transfer Protocol (FTP) server. The file or files may e.g. be executable files for direct or indirect download to and execution on the a node for carrying out the respective method, e.g. by the processing circuit 404 or 604, or may be for intermediate download and compilation to make them executable before further download and execution causing the node(s) to perform the respective method as described above.

Note that any processing module(s) mentioned in the foregoing may be implemented as a software and/or hardware module, e.g. in existing hardware and/or as an Application Specific integrated Circuit (ASIC), a field-programmable gate array (FPGA) or the like. Also note that any hardware module(s) and/or circuit(s) mentioned in the foregoing may e.g. be included in a single ASIC or FPGA, or be distributed among several separate hardware components, whether individually packaged or assembled into a System-on-a-Chip (SoC).

Those skilled in the art will also appreciate that the modules and circuitry discussed herein may refer to a combination of hardware modules, software modules, analog and digital circuits, and/or one or more processors configured with software and/or firmware, e.g. stored in memory, that, when executed by the one or more processors make the first node and the second node to be configured to and/or to perform the above-described methods, respectively.

Identification by any identifier herein may be implicit or explicit. The identification may be unique in the wireless communication network 100 or at least in a part or some area thereof.

The term "network node" as used herein may as such refer to any type of radio network node, described below, or any network node, which may communicate with at least a radio network node. Examples of such network nodes include any radio network node stated above, a core network node, Operations & Maintenance (O&M), Operations Support Systems (OSS), Self Organizing Network (SON) node, positioning node etc.

The term "radio network node" as used herein may as such refer to any type of network node serving a wireless device and/or that are connected to other network node(s) or network element(s) or any radio node from which a wireless device receives signals. Examples of radio network nodes are Node B, Base Station (BS), Multi-Standard Radio (MSR) node such as MSR BS, eNB, eNodeB, network controller, RNC, Base Station Controller (BSC), relay, donor node controlling relay, Base Transceiver Station (BTS), Access Point (AP), transmission points, transmission nodes, nodes in distributed antenna system (DAS), an access point, a radio access point, a Remote Radio Unit (RRU), a Remote Radio Head (RRH), etc.

The term "device" or "wireless device" as used herein, may as such refer to any type of device arranged to communicate with a radio network node in a wireless, cellular and/or mobile communication system, such as the wireless communication network 100, and may thus be referred to as e.g. a wireless communication device or a radio communication device. Examples include: target devices, device to device UE, device for Machine Type of Communication (MTC), MTC device, machine type UE or UE capable of machine to machine (M2M) communication, low-cost and/or low-complexity UE, a sensor equipped with UE, a tablet device, a mobile terminal, smart phone, laptop embedded equipped (LEE), laptop mounted equipment (LME), USB dongles, Customer Premises Equipment (CPE), an Internet of Things (loT) device, or a Narrowband loT (NB-IOT) devicePersonal Digital Assistant (PDA), iPAD, Tablet, mobile terminals, smart phone, Laptop Embedded Equipment (LEE), Laptop Mounted Equipment (LME), Universal Serial Bus (USB) dongles etc. While said terms are used frequently herein for convenience, or in the context of examples involving other 3GPP nomenclature, it must be appreciated that the term as such is non-limiting and the teachings herein apply to essentially any type of wireless device.

The term "node" as used herein may as such refer to any type of network node or wireless device, such as described above.

Note that with regard to the downlink, the term "transmitter" may be used herein to refer to a radio network node, e.g. base station, and the term "receiver" may refer to a wireless device.

Note that although terminology used herein may be particularly associated with and/or exemplified by certain cellular communication systems, wireless communication networks etc., depending on terminology used, such as wireless communication networks based on 3GPP, this should as such not be seen as limiting the scope of the embodiments herein to only such certain systems, networks etc.

As used herein, the term "memory" may refer to a hard disk, a magnetic storage medium, a portable computer diskette or disc, flash memory, random access memory (RAM) or the like. Furthermore, the memory may be an internal register memory of a processor.

Also note that any enumerating terminology such as first network node, second network node, first base station, second base station, etc., that may have been used herein, as such should be considering non-limiting and the terminology as such does not imply a certain hierarchical relation. Without any explicit information in the contrary, naming by enumeration should be considered merely a way of accomplishing different names.

## Claims

1. A method, performed by a wireless communication network (100), for supporting cell selection and/or cell reselection for a wireless communication device (120; 600) operative in the wireless communication network (100), wherein the method comprises:
- *obtaining (201; 301)* information regarding resources associated with a potential target cell (116a) for the wireless communication device (120; 600), which resources would be associated with the wireless communication device (120; 600) if the wireless communication device (120; 600) would camp on said potential target cell (116a),
- *determining (202; 302),* based on said obtained information, an indicator, and
- *sending (203; 303)* the determined indicator to the wireless communication device (120; 600),
wherein the method is
**characterized by** that the indicator being determined and sent is indicating to the wireless communication device (120; 600) how to evaluate said potential target cell (116a) regarding cell selection and/or cell reselection.

2. The method as claimed in claim 1, wherein the method is performed by a network node (110; 113; 400) comprised in the wireless communication network (100).

3. A network node (110; 113; 400) for supporting cell selection and/or cell reselection for a wireless communication device (120; 600) operative in the wireless communication network (100), wherein the network node (110; 113; 400) is configured to:
obtain (201; 301) information regarding resources associated with a potential target cell (116a), which resources would be associated with the wireless communication device (120; 600) if the wireless communication device (120; 600) would camp on said potential target cell (116a),
determine (202; 302), based on said obtained information, an indicator for indicating to the wireless communication device (120; 600) how to evaluate said potential target cell (116a) regarding cell selection and/or cell reselection, and
send (203; 303) the determined indicator to the wireless communication device (120; 600).

4. The network node (110; 113; 400) as claimed in claim 3, wherein said indicator is determined by selecting from a number of predetermined indicators.

5. The network node (110; 113; 400) as claimed in any one of claims 3-4, wherein the said determined indicator indicates that signal quality is to be used for evaluating said potential target cells (116a) and/or that signal strength is to be used for evaluating said potential target cell (116a).

6. The network node (110; 113; 400) as claimed in claim 5, wherein said determined indicator indicates, based on a number of channels allocated for broadcast channels in the potential target cell (116a), that signal quality is to be used for evaluating said potential target cell (116a).

7. The network node (110; 113; 400) as claimed in claim 5, wherein said determined indicator indicates that both signal quality and signal strength are to be used for evaluating said potential target cell (116a).

8. The network node (110; 113) as claimed in any one of claims 3-7, wherein said indicator is determined based on estimated or expected interference affecting the wireless communication device (120; 600).

9. A method, performed by a wireless communication device (120; 600), for supporting cell selection and/or cell reselection by the wireless communication device (120; 600) in a wireless communication network (100), wherein the method comprises:
- *receiving (203; 501),* from a network node (110, 113, 400) of the wireless communication network (100), an indicator, which indicator has been determined by the network node (110, 113, 400) of the wireless communication network (100) based on information obtained by the wireless communication network (100) regarding resources associated with a potential target cell (116a), which resources would be associated with the wireless communication device (120; 600) if the wireless communication device (120; 600) would camp on said potential target cell, and
- *evaluating (204; 502),* based on said received indicator, said potential target cell regarding cell selection and/or cell reselection,
wherein the method is
**characterized in that** the indicator being received is indicating to the wireless communication device (120; 600) how to evaluate said potential target cell (116a) regarding cell selection and/or cell reselection.

10. A wireless communication device (120; 600) for supporting cell selection and/or cell reselection by the wireless communication device (120; 600) in a wireless communication network (100), wherein the wireless communication device (120; 600) is configured to:
receive (203; 501), from a network node (110, 113, 400) of the wireless communication network (100), an indicator, which indicator has been determined by the network node (110, 113, 400) of the wireless communication network (100) based on information obtained by the wireless communication network (100) regarding resources associated with a potential target cell (116a), which resources would be associated with the wireless communication device (120; 600) if the wireless communication device (120; 600) would camp on said potential target cell, and
evaluate (204; 502), based on said received indicator said potential target cell regarding cell selection and/or cell reselection,
**characterized in that** the indicator is indicating to the wireless communication device (120; 600) how to evaluate said potential target cell (116a) regarding cell selection and/or cell reselection.

11. The wireless communication device (120; 600) as claimed in claim 10, wherein the wireless communication device (120; 600) is further configured to:
select or reselect (205; 503), based on said evaluation, said cell as a cell to camp on.

12. The wireless communication device (120; 600) as claimed in any one of claims 10-11, wherein said indicator indicates that signal quality and/or signal strength are to be used for evaluating said potential target cell (116a).

13. The wireless communication device (120; 600) as claimed in claim 11, wherein said indicator indicates, based on a number of channels allocated for broadcast channels in a potential target cell (116a), that signal quality is to be used for evaluating said potential target cell (116a).

14. The wireless communication device (120; 600) as claimed in claim 11, wherein said indicator indicates that both signal quality and signal strength are to be used for evaluating said potential target cell (116a).

15. The wireless communication device (120; 600) as claimed in any one of claims 10-14, wherein said indicator is determined based on estimated or expected interference affecting the wireless communication device (120; 600).

16. The wireless communication device (120; 600) as claimed in any one of claims 10-15, wherein said indicator is received from a cell that the wireless communication device (120; 600) is currently camping on and/or from potential target cells (116a-b).

## Patentansprüche

1. Verfahren, das von einem drahtlosen Kommunikationsnetzwerk (100) durchgeführt wird, um die Zellauswahl und/oder Zellneuauswahl für eine drahtlose Kommunikationsvorrichtung (120; 600) zu unterstützen, die in dem drahtlosen Kommunikationsnetzwerk (100) operiert, wobei das Verfahren umfasst:
- *Erhalten (201; 301)* von Informationen über Ressourcen, die einer potenziellen Zielzelle (116a) für die drahtlose Kommunikationsvorrichtung (120; 600) zugeordnet sind, wobei diese Ressourcen der drahtlosen Kommunikationsvorrichtung (120; 600) zugeordnet wären, wenn die drahtlose Kommunikationsvorrichtung (120; 600) in der potenziellen Zielzelle (116a) campen würde,
- *Bestimmen (202; 302)* eines Indikators basierend auf den erhaltenen Informationen und
- *Senden (203; 303)* des bestimmten Indikators an die drahtlose Kommunikationsvorrichtung (120; 600),
wobei das Verfahren
**dadurch gekennzeichnet, dass** der Indikator, der bestimmt und gesendet wird, der drahtlosen Kommunikationsvorrichtung (120; 600) anzeigt, wie die potenzielle Zielzelle (116a) hinsichtlich Zellauswahl und/oder Zellneuauswahl bewertet werden kann.

2. Verfahren nach Anspruch 1, wobei das Verfahren von einem Netzwerkknoten (110; 113; 400) durchgeführt wird, der in dem drahtlosen Kommunikationsnetzwerk (100) enthalten ist.

3. Netzwerkknoten (110; 113; 400) zum Unterstützen der Zellauswahl und/oder Zellneuauswahl für eine drahtlose Kommunikationsvorrichtung (120; 600), die in dem drahtlosen Kommunikationsnetzwerk (100) wirksam ist, wobei der Netzwerkknoten (110; 113; 400) konfiguriert ist zum:
Erhalten (201; 301) von Informationen über Ressourcen, die einer potenziellen Zielzelle (116a) zugeordnet sind, wobei diese Ressourcen der drahtlosen Kommunikationsvorrichtung (120; 600) zugeordnet würden, wenn die drahtlose Kommunikationsvorrichtung (120; 600) in der potenziellen Zielzelle (116a) campen würde,
Bestimmen (202; 302), basierend auf den erhaltenen Informationen, eines Indikators zum Anzeigen an die drahtlose Kommunikationsvorrichtung (120; 600), wie die potenzielle Zielzelle (116a) bezüglich Zellauswahl und/oder Zellneuauswahl bewertet werden kann, und
Senden (203; 303) des bestimmten Indikators an die drahtlose Kommunikationsvorrichtung (120; 600).

4. Netzwerkknoten (110; 113; 400) nach Anspruch 3, wobei der Indikator durch Auswählen aus einer Reihe von vorbestimmten Indikatoren bestimmt wird.

5. Netzwerkknoten (110; 113; 400) nach einem der Ansprüche 3-4, wobei der bestimmte Indikator anzeigt, dass die Signalqualität zum Bewerten der potenziellen Zielzellen (116a) zu verwenden ist und/oder dass die Signalstärke zum Bewerten der potenziellen Zielzelle (116a) zu verwenden ist.

6. Netzwerkknoten (110; 113; 400) nach Anspruch 5, wobei der bestimmte Indikator basierend auf einer Anzahl von Kanälen, die für Sendekanäle in der potenziellen Zielzelle (116a) zugeordnet sind, anzeigt, dass die Signalqualität zum Bewerten der potenziellen Zielzelle (116a) verwendet werden soll.

7. Netzwerkknoten (110; 113; 400) nach Anspruch 5, wobei der bestimmte Indikator anzeigt, dass sowohl die Signalqualität als auch die Signalstärke zum Auswerten der potenziellen Zielzelle (116a) zu verwenden sind.

8. Netzwerkknoten (110; 113) nach einem der Ansprüche 3-7, wobei der Indikator basierend auf einer geschätzten oder erwarteten Interferenz, die die drahtlose Kommunikationsvorrichtung (120; 600) beeinflusst, bestimmt wird.

9. Verfahren, das von einer drahtlosen Kommunikationsvorrichtung (120; 600) durchgeführt wird, um die Zellauswahl und/oder Zellwiederauswahl durch die drahtlose Kommunikationsvorrichtung (120; 600) in einem drahtlosen Kommunikationsnetzwerk (100) zu unterstützen,
wobei das Verfahren umfasst:
- *Empfangen (203; 501)* eines Indikators von einem Netzwerkknoten (110, 113, 400) des drahtlosen Kommunikationsnetzwerks (100), wobei der Indikator durch den Netzwerkknoten (110, 113, 400) des drahtlosen Kommunikationsnetzwerks (100) basierend auf Informationen, die durch das drahtlose Kommunikationsnetzwerk (100) erhalten wurden, bezüglich Ressourcen, die einer potenziellen Zielzelle (116a) zugeordnet sind, bestimmt wurde, wobei diese Ressourcen der drahtlosen Kommunikationsvorrichtung (120; 600) zugeordnet würden, wenn die drahtlose Kommunikationsvorrichtung (120; 600) in der potenziellen Zielzelle campen würde, und
- *Auswerten (204; 502)* der potenziellen Zielzelle hinsichtlich der Zellauswahl und/oder der Zellneuauswahl, basierend auf dem empfangenen Indikator,
wobei das Verfahren
**dadurch gekennzeichnet, dass** der empfangene Indikator der drahtlosen Kommunikationsvorrichtung (120; 600) anzeigt, wie die potenzielle Zielzelle (116a) hinsichtlich Zellauswahl und/oder Zellneuauswahl bewertet werden kann.

10. Drahtlose Kommunikationsvorrichtung (120; 600) zum Unterstützen der Zellauswahl und/oder Zellneuauswahl durch die drahtlose Kommunikationsvorrichtung (120; 600) in einem drahtlosen Kommunikationsnetzwerk (100), wobei die drahtlose Kommunikationsvorrichtung (120; 600) konfiguriert ist zum:
Empfangen (203; 501) eines Indikators von einem Netzwerkknoten (110, 113, 400) des drahtlosen Kommunikationsnetzes (100), wobei der Indikator durch den Netzwerkknoten (110, 113, 400) des drahtlosen Kommunikationsnetzwerks (100) basierend auf Informationen, die durch das drahtlose Kommunikationsnetzwerk (100) erhalten wurden, über Ressourcen, die einer potenziellen Zielzelle (116a) zugeordnet sind, bestimmt wurde, wobei die Ressourcen der drahtlosen Kommunikationsvorrichtung (120; 600) zugeordnet würden, wenn die drahtlose Kommunikationsvorrichtung (120; 600) in der potenziellen Zielzelle campen würde, und
Auswerten (204; 502), basierend auf dem empfangenen Indikator, der potenziellen Zielzelle bezüglich der Zellauswahl und/oder der Zellneuauswahl,
**dadurch gekennzeichnet, dass** der Indikator der drahtlosen Kommunikationsvorrichtung (120; 600) anzeigt, wie die potenzielle Zielzelle (116a) hinsichtlich der Zellauswahl und/oder der Zellneuauswahl bewertet werden kann.

11. Drahtlose Kommunikationsvorrichtung (120; 600) nach Anspruch 10, wobei die drahtlose Kommunikationsvorrichtung (120; 600) weiterhin konfiguriert ist zum: Auswählen oder Neuauswählen (205; 503), basierend auf der Auswertung, der Zelle als eine Zelle zum darin campen.

12. Drahtlose Kommunikationsvorrichtung (120; 600) nach einem der Ansprüche 10-11, wobei der Indikator anzeigt, dass die Signalqualität und/oder Signalstärke zum Auswerten der Zielzelle (116a) zu verwenden ist.

13. Drahtlose Kommunikationsvorrichtung (120; 600) nach Anspruch 11, wobei der Indikator basieren auf einer Anzahl von Kanälen, die für Sendekanäle in der potenziellen Zielzelle (116a) zugeordnet sind, anzeigt, dass die Signalqualität zum Bewerten der potenziellen Zielzelle (116a) verwendet werden soll.

14. Drahtlose Kommunikationsvorrichtung (120; 600) nach Anspruch 11, wobei der Indikator anzeigt, dass sowohl die Signalqualität als auch die Signalstärke zum Auswerten der potenziellen Zielzelle (116a) zu verwenden sind.

15. Drahtlose Kommunikationsvorrichtung (120; 600) nach einem der Ansprüche 10-14, wobei der Indikator basierend auf einer geschätzten oder erwarteten Interferenz, die die drahtlose Kommunikationsvorrichtung (120; 600) beeinflusst, bestimmt wird.

16. Drahtlose Kommunikationsvorrichtung (120; 600) nach einem der Ansprüche 10-15, wobei der Indikator von einer Zelle erhalten wird, in der die drahtlose Kommunikationsvorrichtung (120; 600) momentan campt, und/oder von potenziellen Zielzellen (116a-b).

## Revendications

1. Procédé, effectué par un réseau de communication sans fil (100), permettant la prise en charge d'une sélection de cellule et/ou d'une resélection de cellule pour un dispositif de communication sans fil (120; 600) opérationnel dans le réseau de communication sans fil (100), dans lequel le procédé comprend :
- *l'obtention (201 ; 301)* d'informations relatives à des ressources associées à une cellule cible potentielle (116a) pour le dispositif de communication sans fil (120; 600), les ressources étant associées au dispositif de communication sans fil (120; 600) si le dispositif de communication sans fil (120 ; 600) campe sur ladite cellule cible potentielle (116a),
- *la détermination (202; 302),* sur la base desdites informations obtenues, d'un indicateur, et
- *l'envoi (203 ; 303)* de l'indicateur déterminé au dispositif de communication sans fil (120; 600),
dans lequel le procédé est
**caractérisé par le fait que** l'indicateur étant déterminé et envoyé indique au dispositif de communication sans fil (120; 600) comment évaluer ladite cellule cible potentielle (116a) en ce qui concerne une sélection de cellule et/ou une resélection de cellule.

2. Procédé selon la revendication 1, dans lequel le procédé est effectué par un nœud de réseau (110 ; 113 ; 400) compris dans le réseau de communication sans fil (100).

3. Nœud de réseau (110; 113; 400) permettant la prise en charge d'une sélection de cellule et/ou d'une resélection de cellule pour un dispositif de communication sans fil (120; 600) opérationnel dans le réseau de communication sans fil (100), dans lequel le nœud de réseau (110 ; 113 ; 400) est configuré pour :
l'obtention (201 ; 301) d'informations relatives à des ressources associées à une cellule cible potentielle (116a), les ressources étant associées au dispositif de communication sans fil (120; 600) si le dispositif de communication sans fil (120; 600) campe sur ladite cellule cible potentielle (116a),
la détermination (202 ; 302), sur la base desdites informations obtenues, d'un indicateur pour indiquer au dispositif de communication sans fil (120; 600) comment évaluer ladite cellule cible potentielle (116a) en ce qui concerne une sélection de cellule et/ou une resélection de cellule, et
l'envoi (203 ; 303) de l'indicateur déterminé au dispositif de communication sans fil (120; 600).

4. Nœud de réseau (110; 113; 400) selon la revendication 3, dans lequel ledit indicateur est déterminé par la sélection parmi un nombre d'indicateurs prédéterminés.

5. Nœud de réseau (110 ; 113 ; 400) selon l'une quelconque des revendications 3 et 4, dans lequel ledit indicateur déterminé indique qu'une qualité de signal doit être utilisée pour l'évaluation de ladite cellule cible potentielle (116a) et/ou qu'une force de signal doit être utilisée pour l'évaluation de ladite cellule cible potentielle (116a).

6. Nœud de réseau (110; 113; 400) selon la revendication 5, dans lequel ledit indicateur déterminé indique, sur la base d'un nombre de canaux alloués pour des canaux de diffusion dans la cellule cible potentielle (116a), qu'une qualité de signal doit être utilisée pour l'évaluation de ladite cellule cible potentielle (116a).

7. Nœud de réseau (110; 113; 400) selon la revendication 5, dans lequel ledit indicateur déterminé indique que la qualité de signal et la force de signal doivent être utilisées pour l'évaluation de ladite cellule cible potentielle (116a).

8. Nœud de réseau (110 ; 113) selon l'une quelconque des revendications 3 à 7, dans lequel ledit indicateur est déterminé sur la base d'un brouillage estimé ou prévu affectant le dispositif de communication sans fil (120 ; 600).

9. Procédé, effectué par un dispositif de communication sans fil (120; 600), permettant la prise en charge d'une sélection de cellule et/ou d'une resélection de cellule par le dispositif de communication sans fil (120; 600) dans un réseau de communication sans fil (100), dans lequel le procédé comprend :
- *la réception (203; 501),* en provenance d'un nœud de réseau (110, 113, 400) du réseau de communication sans fil (100), d'un indicateur, l'indicateur étant déterminé par le nœud de réseau (110, 113, 400) du réseau de communication sans fil (100) sur la base d'informations obtenues par le réseau de communication sans fil (100) en ce qui concerne des ressources associées à une cellule cible potentielle (116a), les ressources étant associées au dispositif de communication sans fil (120; 600) si le dispositif de communication sans fil (120 ; 600) campe sur ladite cellule cible potentielle, et
- *l'évaluation (204; 502),* sur la base dudit indicateur reçu, de ladite cellule cible potentielle en ce qui concerne une sélection de cellule et/ou une resélection de cellule,
dans lequel le procédé est
**caractérisé en ce que** l'indicateur étant reçu indique au dispositif de communication sans fil (120; 600) comment évaluer ladite cellule cible potentielle (116a) en ce qui concerne une sélection de cellule et/ou une resélection de cellule.

10. Dispositif de communication sans fil (120; 600) permettant la prise en charge d'une sélection de cellule et/ou d'une resélection de cellule par le dispositif de communication sans fil (120 ; 600) dans un réseau de communication sans fil (100), dans lequel le dispositif de communication sans fil (120 ; 600) est configuré pour :
la réception (203 ; 501), en provenance d'un nœud de réseau (110, 113, 400) du réseau de communication sans fil (100), d'un indicateur, l'indicateur étant déterminé par le nœud de réseau (110, 113, 400) du réseau de communication sans fil (100) sur la base d'informations obtenues par le réseau de communication sans fil (100) en ce qui concerne des ressources associées à une cellule cible potentielle (116a), les ressources étant associées au dispositif de communication sans fil (120; 600) si le dispositif de communication sans fil (120 ; 600) campe sur ladite cellule cible potentielle, et
l'évaluation (204 ; 502), sur la base dudit indicateur reçu, de ladite cellule cible potentielle en ce qui concerne une sélection de cellule et/ou une resélection de cellule,
**caractérisé en ce que** l'indicateur indique au dispositif de communication sans fil (120; 600) comment évaluer ladite cellule cible potentielle (116a) en ce qui concerne une sélection de cellule et/ou une resélection de cellule.

11. Dispositif de communication sans fil (120 ; 600) selon la revendication 10, dans lequel le dispositif de communication sans fil (120 ; 600) est en outre configuré pour :
la sélection ou la resélection (205 ; 503), sur la base de ladite évaluation, de ladite cellule en tant qu'une cellule sur laquelle camper.

12. Dispositif de communication sans fil (120; 600) selon l'une quelconque des revendications 10 et 11, dans lequel ledit indicateur indique qu'une qualité de signal et/ou une force de signal doivent être utilisées pour l'évaluation de ladite cellule cible potentielle (116a).

13. Dispositif de communication sans fil (120; 600) selon la revendication 11, dans lequel ledit indicateur indique, sur la base d'un nombre de canaux alloués pour des canaux de diffusion dans une cellule cible potentielle (116a), qu'une qualité de signal doit être utilisée pour l'évaluation de ladite cellule cible potentielle (116a).

14. Dispositif de communication sans fil (120; 600) selon la revendication 11, dans lequel ledit indicateur indique que la qualité de signal et la force de signal doivent être utilisées pour l'évaluation de ladite cellule cible potentielle (116a).

15. Dispositif de communication sans fil (120; 600) selon l'une quelconque des revendications 10 à 14, dans lequel ledit indicateur est déterminé sur la base d'un brouillage estimé ou prévu affectant le dispositif de communication sans fil (120 ; 600).

16. Dispositif de communication sans fil (120; 600) selon l'une quelconque des revendications 10 à 15, dans lequel ledit indicateur est reçu en provenance d'une cellule sur laquelle le dispositif de communication sans fil (120; 600) est en train de camper et/ou en provenance de cellules cibles potentielles (116a-b).
